**Europäisches Patentamt**

**European Patent Office**

**Office européen des brevets**

(11) Veröffentlichungsnummer: **0 064 659**

**A2**

## EUROPÄISCHE PATENTANMELDUNG

(21) Anmeldenummer: **82103526.8**

(22) Anmeldetag: **26.04.82**

(51) Int. Cl.³: **B 23 K 9/12**

(30) Priorität: **30.04.81 BG 51904/81**

(43) Veröffentlichungstag der Anmeldung:
**17.11.82 Patentblatt 82/46**

(84) Benannte Vertragsstaaten:
**AT BE CH DE FR GB IT LI SE**

(71) Anmelder: **INSTITUT PO TECHNITSCHESKA
KIBERNETIKA I ROBOTIKA
Akademik Bontschev-Strasse, Block 12
Sofia(BG)**

(72) Erfinder: **Angelov, Angel Simeonov, Dipl.-Ing.
Boul. Lenin Block 73
Sofia(BG)**

(72) Erfinder: **Ivanov, Dimiter Alexandrov, Dipl.-Ing.
D. Belischki-Strasse Block 4-27
Sofia(BG)**

(74) Vertreter: **Ebbinghaus, Dieter et al,
K.L. Schiff Dr. A. von Funer Dipl.-Ing. P. Strehl Dr. U.
Schübel-Hopf Dipl.-Ing. D. Ebbinghaus Dr. Ing. D. Finck
Patentanwälte Mariahilfplatz 2 & 3
D-8000 München 90(DE)**

(54) **Einrichtung zur Zuführung von Draht auf grosse Entfernungen.**

(57) Die Erfindung betrifft eine Einrichtung für die Zuführung von Draht auf große Entfernungen, die für die Drahtzuführung beim Schweißen eingesetzt werden kann.

Die erfindungsgemäße Einrichtung enthält einen ersten Gleichstrommotor 1, der über einen Geschwindigkeitsstabilisator 2 und einen Generator 3 für Durchflußimpulse mit einem Thyristorgleichrichter 4 verbunden ist. Der erste Motor 1 und die übrigen Gleichstrommotoren 6 sind über Trenndioden 5 mit dem einen Eingang des Thyristorgleichrichters 4 verbunden, mit dessen zweitem Ausgang die Gleichstrommotoren 1 und 6 direkt verbunden sind. Parallel zu jedem Gleichstrommotor 1 und 6 ist eine Trenndiode 7 geschaltet. Jeder der Gleichstrommotoren 1, 6 ist mit einem entsprechenden Drahtzuführungsmechanismus 8 gekuppelt. Die Drahtzuführungsmechanismen 8 sind in Reihe angeordnet und mechanisch mit dem Elektrodendraht 9 verbunden.

Ein Vorteil der erfindungsgemäßen Einrichtung liegt in der vereinfachten Schaltung, wobei ihre funktionellen Möglichkeiten erhalten bleiben.

PATENTANWÄLTE

SCHIFF v. FÜNER STREHL SCHÜBEL-HOPF EBBINGHAUS FINCK

MARIAHILFPLATZ 2 & 3, MÜNCHEN 90
POSTADRESSE: POSTFACH 95 01 60, D-8000 MÜNCHEN 95

ALSO PROFESSIONAL REPRESENTATIVES
BEFORE THE EUROPEAN PATENT OFFICE

KARL LUDWIG SCHIFF (1964 – 1978)
DIPL CHEM DR ALEXANDER v. FÜNER
DIPL. ING PETER STREHL
DIPL CHEM DR URSULA SCHÜBEL-HOPF
DIPL. ING DIETER EBBINGHAUS
DR ING DIETER FINCK

TELEFON (089) 48 20 54
TELEX 5-23 565 AURO D
TELEGRAMME AUROMARCPAT MÜNCHEN

0064659

EPA- 22724

- 1 -    26. April 1982

## EINRICHTUNG ZUR ZUFÜHRUNG VON DRAHT AUF GROSSE ENTFERNUNGEN

Die Erfindung betrifft eine Einrichtung zur Zuführung von
Draht auf große Entfernungen, die für die Drahtzuführung beim
Schweißen eingesetzt werden kann.

Eine bekannte Einrichtung zur Zuführung von Draht auf große
Entfernungen enthält Drahtzuführungsmechanismen, von denen
jeder an einen Gleichstrommotor mit parallelgeschalteter Freilaufdiode gekoppelt ist. Der erste Gleichstrommotor ist über
einen Geschwindigkeitsstabilisator und Generator für Durchflußimpulse mit einem Thyristorgleichrichter verbunden, dessen Ausgänge mit dem Gleichstrommotor verbunden sind. Die übrigen
Gleichstrommotoren sind, jeder einzeln, über einen entsprechenden Thyristorgleichrichter mit einem entsprechenden Generator
für Durchflußimpulse verbunden. Der Ausgang des Generators
für Durchflußimpulse beim ersten Gleichstrommotor ist über eine Synchronisierschiene mit den Eingängen der Generatoren für
Durchflußimpulse bei den übrigen Gleichstrommotoren verbunden
(BG-PS 29 025, DE-OS 30 04 323).

Ein Nachteil dieser bekannten Einrichtung liegt in dem komplizierten Schaltungsaufbau.

Der Erfindung liegt die Aufgabe zugrunde, eine Einrichtung zur Zuführung von Draht auf große Entfernungen zu entwickeln, die eine vereinfachte Schaltung aufweist.

Diese Aufgabe wird erfindungsgemäß durch eine Einrichtung zur Zuführung von Draht auf große Entfernungen gelöst, die Drahtzuführungsmechanismen enthält, von denen jeder an einen Gleichstrommotor mit parallelgeschalteter Freilaufdiode verbunden ist. Der erste Gleichstrommotor ist über einen Geschwindigkeitsstabilisator und einen Generator für Durchflußimpulse mit einem Thyristorgleichrichter verbunden, dessen Ausgänge mit dem ersten Gleichstrommotor verbunden sind. Die Einrichtung ist dadurch gekennzeichnet, daß jeder einzelne der übrigen Gleichstrommotoren mit den Ausgängen des Thyristorgleichrichters verbunden ist, wobei alle Motoren über eine entsprechende Trenndiode an den Thyristorgleichrichter angeschlossen sind.

Ein Vorteil der erfindungsgemäßen Einrichtung liegt in der vereinfachten Struktur, wobei ihre funktionellen Möglichkeiten erhalten bleiben.

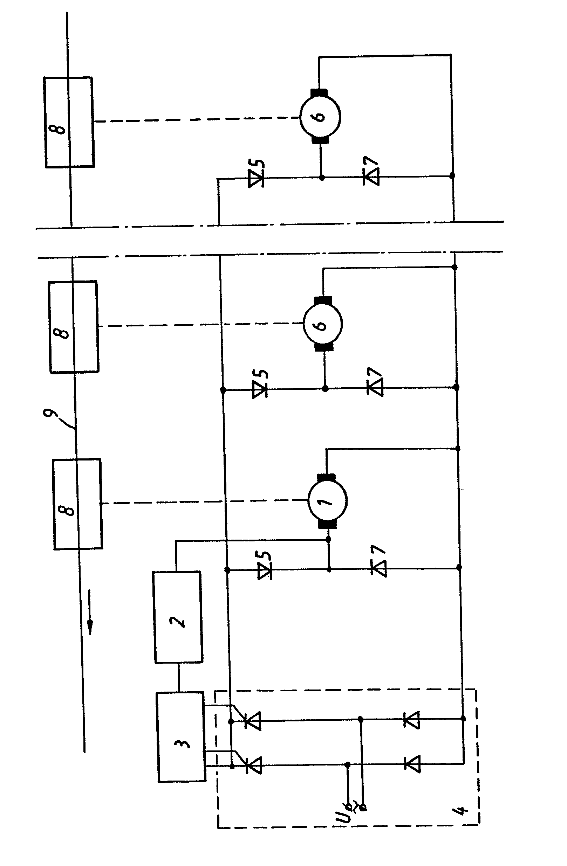

Die Erfindung wird anhand des in der Zeichnung gezeigten Ausführungsbeispiels näher erläutert. Die Zeichnung zeigt das Schaltbild einer Einrichtung zur Zuführung von Draht auf große Entfernungen.

Die Einrichtung enthält einen ersten Gleichstrommotor 1, der über einen Geschwindigkeitsstabilisator 2 und einen Generator 3 für Durchflußimpulse mit einem Thyristorgleichrichter 4 verbunden ist, der in bekannter Weise realisiert ist. Der erste Motor 1 und die übrigen Gleichstrommotoren 6 sind über Trenndioden 5 mit dem einen Eingang des Thyristorgleichrichters 4 verbunden, mit dessen zweitem Ausgang die Gleichstrommotoren 1 und 6 direkt verbunden sind. Parallel zu jedem Gleichstrommotor 1 und 6 ist eine Trenndiode 7 geschaltet. Jeder Gleichstrommotor 1, 6 ist mit einem entsprechenden Drahtzuführungsmechanismus 8 gekuppelt. Die Drahtzuführungsmechanismen 8
sind in Reihe geschaltet und mechanisch mit dem Elektrodendraht 9 verbunden.

Die Wirkungweise der Einrichtung zur Zuführung von Draht auf
große Entfernungen ist wie folgt: Die Thyristorstufe 4 gibt
Speisestromimpulse zu den Motoren 1 und 6. In der Pause
zwischen zwei Impulsen bildet sich in den Motoren eine elektromotorische Spannung, die proportional den Umdrehungen eines jeden Motors 1 und 6 und einem Proportionalitätsfaktor
ist, der infolge von Fertigungstoleranzen für jeden Motor unterschiedlich sein kann. Es ist andererseits möglich, daß sich
in einem gegebenen Moment die Motoren 1 und 6 nicht mit ein
und derselben Geschwindigkeit drehen (1). Aus diesen Gründen
ist es möglich, daß die elektromotorische Spannung eines jeden
Motors 1 und 6 unterschiedlich ist. Die Trenndioden 5 machen
es möglich, daß diese unterschiedlichen Spannungen bei jedem
Motor gleichzeitig und unabhängig voneinander vorhanden sind,
jedoch wird zum Geschwindigkeitsstabilisator als Information
über die Geschwindigkeit nur die elektromotorische Spannung
vom ersten Motor 1 zugeführt. Dies wäre unmöglich, falls die
Motoren 1 und 6 ohne Trenndioden 5 direkt parallelgeschaltet
wären. Ausßerdem würde eine unerwünschte elektromechanische
Zusammenwirkung während der Pausen zwischen den Impulsen entstehen, und zwar würden die Motoren mit höherer elektromotorischer Spannung als Generator und folglich bei Bremsbedingungen arbeiten, während die übrigen Motoren entsprechend antreiben.

PATENTANWÄLTE

SCHIFF v. FÜNER STREHL SCHÜBEL-HOPF EBBINGHAUS FINCK

0064659

MARIAHILFPLATZ 2 & 3, MÜNCHEN 90
POSTADRESSE: POSTFACH 95 01 60, D-8000 MÜNCHEN 95

ALSO PROFESSIONAL REPRESENTATIVES
BEFORE THE EUROPEAN PATENT OFFICE

KARL LUDWIG SCHIFF (1964-1978)
DIPL. CHEM. DR. ALEXANDER v. FÜNER
DIPL. ING. PETER STREHL
DIPL. CHEM. DR. URSULA SCHÜBEL-HOPF
DIPL. ING. DIETER EBBINGHAUS
DR. ING. DIETER FINCK

TELEFON (089) 48 20 54
TELEX 5-23 565 AURO D
TELEGRAMME AUROMARCPAT MÜNCHEN

EPA-22724

26. April 1982

- 4 -

Patentanspruch

Einrichtung zur Zuführung von Draht auf große Entfernungen, die Drahtzuführungsmechanismen (8) enthält, von denen jeder mit einem Gleichstrommotor (1, 6) mit parallelgeschalteter Freilaufdiode (7) gekoppelt ist, wobei der erste Gleichstrommotor (1) über einen Geschwindigkeitsstabilisator und einen Generator (3) für Durchflußimpulse mit einem Thyristorgleichrichter (4) verbunden ist, dessen Ausgänge mit dem ersten Gleichstrommotor verbunden sind, dadurch g e k e n n - z e i c h n e t , daß jeder der nachfolgenden Gleichstrommotoren (6) mit den Ausgängen des Thyristorgleichrichters (4) verbunden ist, wobei alle Motoren (1, 6) über eine entsprechende Trenndiode (5) mit dem Thyristorgleichrichter (4) verbunden sind.